# EUROPEAN PATENT SPECIFICATION

(11) **EP 4 559 819 B1**
(45) Date of publication and mention of the grant of the patent: **14.01.2026**
(21) Application number: 22754456.6
(22) Date of filing: 19.07.2022
(51) Int. Cl.: B64G 1/64, F16B 7/04, F16B 7/18

(54) **BOLT RELEASE SYSTEM FOR SPACECRAFT AND LAUNCHER SEPARATION SYSTEMS AND SEPARATION SYSTEM COMPRISING SAME**
BOLZENFREIGABESYSTEM FÜR RAUMFAHRZEUG UND RAKETENTRENNSYSTEME UND TRENNSYSTEM DAMIT
SYSTÈME DE LIBÉRATION DE BOULONS POUR SYSTÈMES DE SÉPARATION D'ENGINS SPATIAUX ET DE FUSÉES, ET SYSTÈME DE SÉPARATION LE COMPRENANT

(43) Date of publication of application: 28.05.2025
(73) Proprietor: Airbus Defence and Space, S.A., 28906 Getafe (Madrid) (ES)
(72) Inventor: ANDRES MATEY, Juan Miguel, 28022 Madrid (ES)
(74) Representative: Elzaburu S.L.P.
(86) International application number: PCT/ES2022/070470
(87) International publication number: WO 2024/018092

(56) References cited:
- EP-A1- 1 339 604
- KR-B1- 101 445 499
- US-A1- 2019 135 459
- US-A1- 2019 329 913
- US-A1- 2020 324 923
- US-A1- 2022 041 305

## Description

### Field of the invention

The invention refers to a bolt release system, particularly applicable in separations systems, such as launcher separations systems or spacecraft separation systems. The invention also refers to a separation system that comprises such bolt release system.

### Background of the invention

Since the beginning of the development of technologies for carrying loads to outer space many connection and separation systems have been developed for the different structures or phases which make up a carry vehicle and particularly for that which joins the latter to its payload or satellite. Connections based on pyrotechnic strings or explosive bolts are effective and reliable but they generate high levels of vibratory disturbance or shocks which move along the whole vehicle until reaching the most sensitive elements. Thus these kinds of connections are usually reserved for vehicle phase separations which are far from the satellite. In order to separate the satellite, systems are needed which, while maintaining their joining effectiveness, do not produce disturbing effects on separation such as those described.

US 2019/135459 A1 discloses a coupling/uncoupling device which includes a columnar member configured by a divided pair of semicircular members, and a pair of coupling members forming a circular holding section that holds the columnar member. The circular holding section includes a circular inner surface section with which an outer circumferential surface of the columnar member is in slide contact, the circular inner surface section being formed from inner circumferential surfaces of a semicircular section in one coupling member and a semicircular section in the other coupling member. The columnar member is configured to be rotatable in both clockwise and counterclockwise directions along the circular inner surface section about a reference position where a contact surface of the pair of coupling members and a dividing surface of the columnar member are flush with each other.

EP 1339604 A1 relates to a device on a spacecraft comprising a first craft part, a second craft part detachable from the first craft part, as well as a clamp for connecting these said parts. In the clamp there is a prestress that is released on separation. The device comprises at least an energy storing means devised to convert, during separation, at least part of the prestress-stored strain energy to rotational energy.

KR 101445499 B1 discloses a separation nut type non-explosive restraint and release apparatus that relates to a restraint and release apparatus which restrains and releases an object under restraint of a deployable structure installed in a satellite and includes a fixated plate fixated installed in the satellite; a restraint bolt having a head and a body formed to be extended from the head; a separation nut forming a housing recess therein to be screw-coupled to the body of the restraint bolt, wrapping and restraining the object under restraint together with the body and formed to be diviable to both sides; a coupling unit coupling an upper end of the fixated plate to a lower end of the separation nut to rotate the separation nut with respect to the fixated plate; a binding wire wrapped around the separation nut to bind the separation nut; and a heating wire arranged to come into contact with the binding wire, connecting an end part to an external power supply unit to be heated, cutting the binding wire according as it is heated to split the separation nut to both sides and releasing a restraint force of the separation nut applied to the restraint bolt and the object under restraint.

Connection-separation elements have been developed based on preloading a joining support by means of a cable or bolt which is subsequently cut with a pyrotechnic cutter or thermal knife, or rather two previously cut ends are separated with a pyrotechnic nut or an electromechanical nut.

Systems based on prior technology normally used two tension band halves joined by two bolts to be cut by two pyrotechnic elements. This arrangement with a plane of symmetry slightly improves the generation of disturbance by reducing the excitability of the axial symmetry vibration mode, but still maintains a great capacity for exciting these modes, even more so taking into account that steel bands with a small cross section and at high tension, that is, very stretched, are used and therefore tension relaxation is very fast and very symmetrical.

These systems yet entail a very high shock, are not refurbishable as cut bolt needs replacement and could present a contamination issue due to the production of cut bolt debris.

The working principle is that the highly preloaded bolt is cut off by a pyro-cutter at the desired release point. There are a limited number of pyro-cutters in the market for space environment use and with the requested high performances.

Currently designed band type separation systems would require a design adjustment to more commercial high load separation devices, but they imply costly and long activities and sometimes unaffordability due to request for new qualification of the whole system after modifications.

Accordingly, there is a need to provide a bolt release system for spacecraft and launcher separation systems which causes a lower release shock than the existing systems.

### Summary of the invention

The object of the invention is to provide a bolt release system for spacecraft and launcher separation systems that overcomes the mentioned drawbacks.

The invention provides a bolt release system for spacecraft and launcher separation systems that comprises:
- a release device,
- a bolt connected to the release device and protruding from it,
- first retaining means, adjacent to the release device, with at least one end surface and an inner hole,
- second retaining means, distal from the release device, with at least one end surface and an inner hole,
- a first elastic means configured to act on the first retaining means,
- a second elastic means configured to act on the second retaining means,
- a first retaining cap that surrounds at least partially the first retaining means and comprising joining means, the first retaining cap being configured to retain the first retaining means in an open position of the bolt release system,
- a second retaining cap that surrounds at least partially the second retaining means and comprising joining means, the second retaining cap configured to retain the second retaining means in an open position of the bolt release system,
- a releasing bolt, comprising an end section with opposed surfaces and a transversal cut in its most extreme position between the opposed surfaces,
such that:
the opposed surfaces of the end section of the releasing bolt are complementary to at least one end surface of the first retaining means and to at least one end surface of the second retaining means, such that the corresponding complementary surfaces are configured to be able to fit with each other as mating surfaces, and in a closed position of the bolt release system the end section with opposed surfaces is coupled and retained between one end surface of the first retaining means and one end surface of the second retaining means, and
the bolt connected to the release device crosses the inner hole of the first retaining means, the end section with opposed surfaces of the releasing bolt and the inner hole of the second retaining means.

The main advantages of the invention with respect to the prior art devices are the following ones:
- Interchangeability with bolt-cutters to the system of the invention with equal load performance and release capability due to mechanical and electrical I/F similarity.
- A lesser load performance and hence lower cost release device could be used.
- The system of the invention is refurbishable as the release bolt is not destroyed in every actuation.
- It eliminates dependence on a specific high performance bolt-cutter provider, enables to choose in a greater availability of lesser performance release devices from different providers (NEA, pyronuts, linear actuators, etc). It reduces the dependence on existing commercial pyro-cutters.
- Lower shock is generated compared to most of the conventional systems
- No debris are generated, as the release bolt is intact after release.

The invention also provides separation systems comprising bolt release systems, as per claims 10 and 11.

Other characteristics and advantages of the present invention will be clear from the following detailed description of several embodiments illustrative of its object in relation to the attached figures.

### Brief description of drawings

Figure 1 shows a perspective view of a band space separation system.
Figure 2 shows a schematic representation of a prior art separation system using pyrotechnic cutters.
Figure 3 shows a schematic representation of a separation system of the invention, including the bolt release system.
Figure 4 shows another view of a separation system of the invention, including the bolt release system in its closed position.
Figure 5 shows the separation system of the invention, including the bolt release system in its open position.
Figure 6 shows a representation of the bolt release system of the invention in a closed position and with the first and second retaining caps.
Figure 7 shows a representation of the bolt release system of the invention in a closed position.
Figure 8 shows a representation of the bolt release system of the invention in an open position, after triggering.
Figure 9 shows a perspective view of a separation system with a plurality of hold-down and release devices.

### Detailed description of the invention

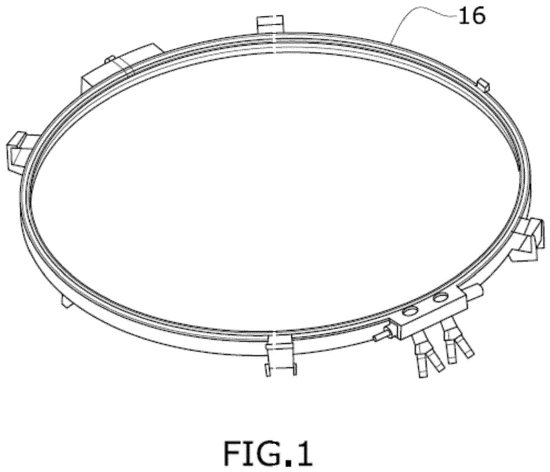

Figure 1 shows a band type separation system, with a band 16 with two halves, such that the halves are joined at their ends by conventional release systems.

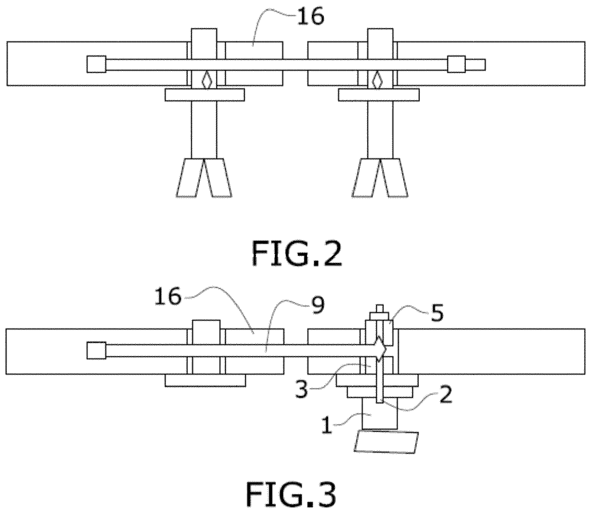

The conventional release systems can be pyrotechnic cutters as the ones shown in figure 2. A highly preloaded bolt (the releasing bolt) is cut off by a pyro-cutter at the desired release point, so the halves of the band 16 are separated.

Figure 3 shows a schematic representation of a separation system of the invention, including the bolt release system of the invention.

The bolt release system for spacecraft and launcher separation systems comprises the following elements:
- a release device 1,
- a bolt 2 connected to the release device 1 and protruding from it,
- first retaining means 3, adjacent to the release device 1, with at least one end surface 4 and an inner hole,
- second retaining means 5, distal from the release device, with at least one end surface 6 and an inner hole,
- a first elastic means configured to act on the first retaining means 3,
- a second elastic means configured to act on the second retaining means 5,
- a first retaining cap 13 that surrounds at least partially the first retaining means 3 and comprising joining means, the first retaining cap 13 being configured to retain the first retaining means 3 in an open position of the bolt release system,
- a second retaining cap 14 that surrounds at least partially the second retaining means 5 and comprising joining means, the second retaining cap 14 configured to retain the second retaining means 5 in an open position of the bolt release system,
- a releasing bolt 9, comprising an end section 10 with opposed surfaces 11 and a transversal cut 12 in its most extreme position between the opposed surfaces 11,
such that the opposed surfaces 11 of the end section 10 of the releasing bolt 9 are complementary to at least one end surface 4 of the first retaining means 3 and to at least one end surface 6 of the second retaining means 5, such that the corresponding complementary surfaces are configured to be able to fit with each other as mating surfaces, and in a closed position of the bolt release system the end section 10 with opposed surfaces 11 is coupled and retained between one end surface 4 of the first retaining means 3 and one end surface 6 of the second retaining means 5, and the bolt 2 connected to the release device 1 crosses the inner hole of the first retaining means 3, the end section 10 with opposed surfaces 11 of the releasing bolt 9 and the inner hole of the second retaining means 5.

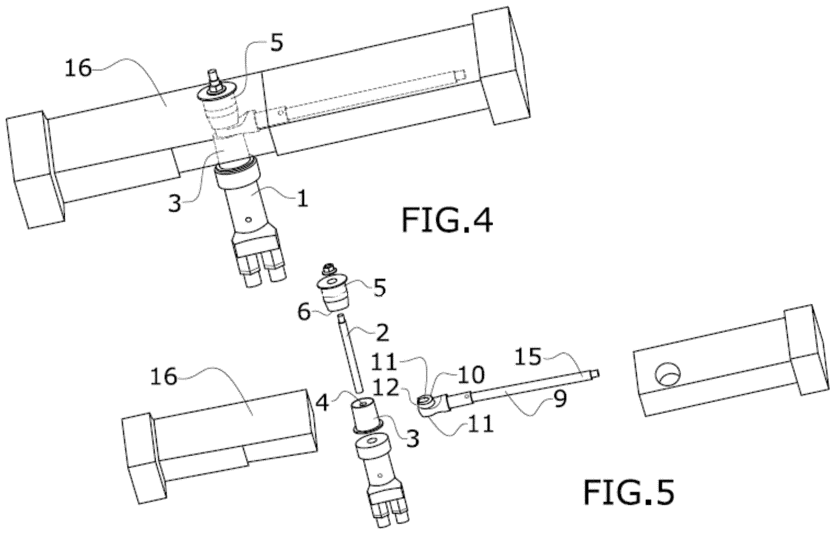

Figures 3 and 4 show a separation system, that comprises a band 16 with two halves and release systems of the invention. The figure shows a release system of the invention that joins two ends of the corresponding halves of the band 16.

In the embodiment of the bolt release system of figure 5, the opposed surfaces 11 of the end section 10 of the releasing bolt 9 are convex, and the corresponding end surface 4 of the first retaining means 3 and the corresponding end surface 6 of the second retaining means 5 are concave.

In figure 5 it can be seen that after the release device is activated, the bolt 2 (also called "pyrobolt") is released, and the first elastic means (for instance, a spring) acts on the first retaining means 3, and the second elastic means (for instance, a spring) acts on the second retaining means 5. Accordingly, the convex surfaces of one end of the releasing bolt 9 are not any longer retained between the corresponding end concave surface of the first retaining means 3 and the corresponding end concave surface of the second retaining means 5, so the releasing bolt 9is released, and the halves of the band 16 are separated.

In another embodiment of the bolt release system (not shown), the opposed surfaces 11 of the end section 10 of the releasing bolt 9 are concave and the corresponding end surface 4 of the first retaining means 3 and the corresponding end surface 6 of the second retaining means 5 are convex.

In any of the above embodiments, the end surfaces 4, 6 of the first retaining means 3 and of the second retaining means 5, and the opposed surfaces 11 of the releasing bolt 9 can be frustoconical, so that the convex and the concave surfaces are configured to fit together as mating surfaces.

In another embodiment of the bolt release system (not shown), the opposed surfaces 11 of the end section 10 of the releasing bolt 9 and the corresponding end surface 4 of the first retaining means 3 and the corresponding end surface 6 of the second retaining means 5 are flat surfaces.

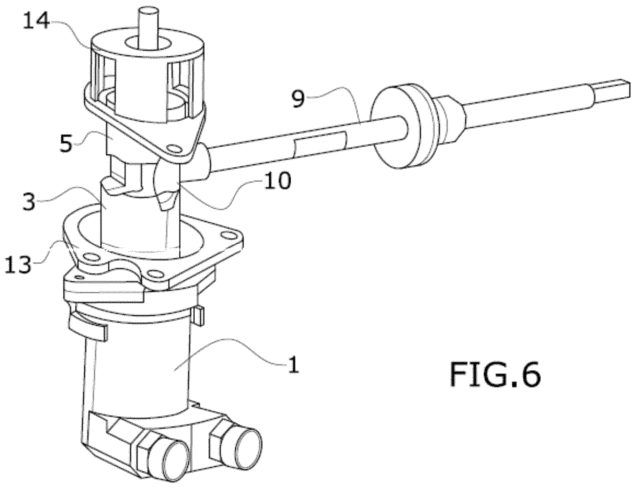

Figure 6 shows a representation of the bolt release system of the invention in a closed position. In this figure 6 the first retaining cap 13 and the second retaining cap 14 are shown. These retaining caps 13, 14 have joining means (not shown) that allow the union of the retaining caps 13, 14 with the band 16 (when the separation system comprises a band 16). In this way, when the bolt release system is triggered and reaches its open position (as in Figure 5) the first retaining means 3 and the second retaining means 5 are retained and no debris is generated.

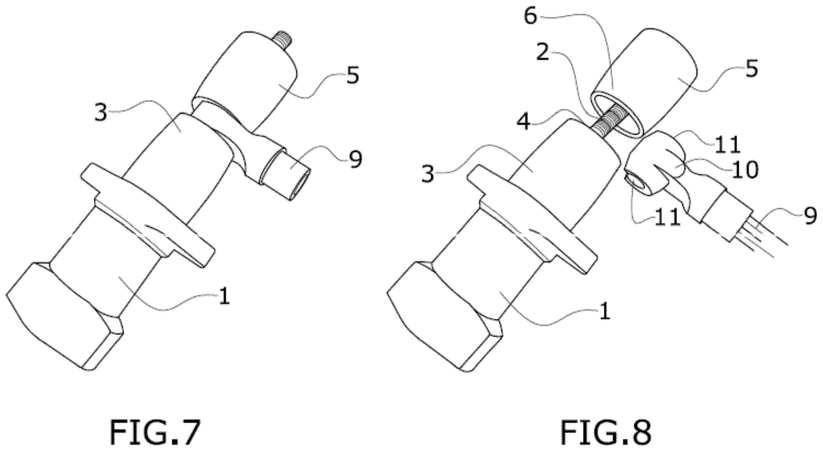

Figure 7 shows a representation of the bolt release system of the invention in a closed position and figure 8 shows a representation of the bolt release system of the invention in an open position, after triggering.

In order to show more clearly how the invention works, the system shown in the figures 4, 5, 7 and 8 does not show the first retaining cap 13 and the second retaining cap 14, which are nevertheless part of the bolt release system, as shown in figure 6.

The release device 1 can be a pyrotechnic nut, a Non Explosive Actuator (NEA) or a linear actuator.

In an embodiment, in the releasing bolt 9 the opposite end to the end 10 with opposed convex surfaces 11 has a threaded section 15. The retaining means 3, 5 can be any suitable elements, such as a lower cap (proximal to the release device 1) and an upper cap (distal from the release device 1).

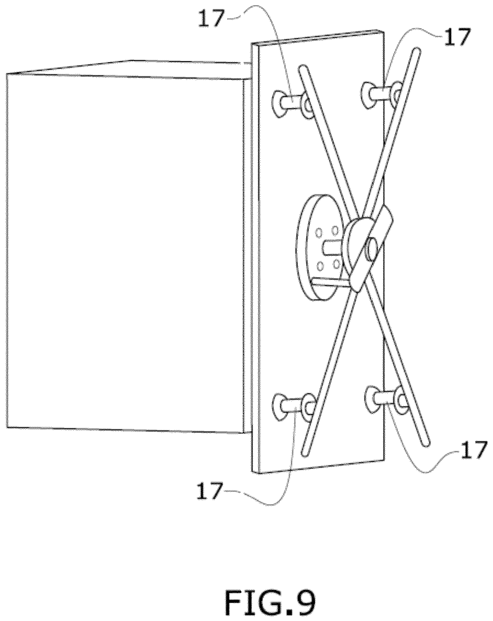

Figure 9 shows a perspective view of another separation system with a plurality of hold-down and release devices 17. Each hold-down and release device 17 comprises a release bolt, and additionally comprises a bolt release system of any embodiment of the invention. The first retaining cap and the second retaining cap are joined to the hold-down and release device 17 by respective joining means.

Although the present invention has been fully described in connection with preferred embodiments, it is evident that modifications may be introduced within the scope thereof, not considering this as limited by these embodiments, but by the contents of the following claims.

## Claims

1. Bolt release system for spacecraft and launcher separation systems, that comprises:
- a release device (1),
- a bolt (2) connected to the release device (1) and protruding from it,
- first retaining means (3), adjacent to the release device (1), with at least one end surface (4) and an inner hole,
- second retaining means (5), distal from the release device (1), with at least one end surface (6) and an inner hole,
- a first elastic means configured to act on the first retaining means (3),
- a second elastic means configured to act on the second retaining means (5),
- a first retaining cap (13) that surrounds at least partially the first retaining means (3) and comprising joining means, the first retaining cap (13) being configured to retain the first retaining means (3) in an open position of the bolt release system,
- a second retaining cap (14) that surrounds at least partially the second retaining means (5) and comprising joining means, the second retaining cap (14) configured to retain the second retaining means (5) in an open position of the bolt release system,
- a releasing bolt (9), comprising an end section (10) with opposed surfaces (11) and a transversal cut (12) in its most extreme position between the opposed surfaces (11),
such that:
the opposed surfaces (11) of the end section (10) of the releasing bolt (9) are complementary to the at least one end surface (4) of the first retaining means (3) and to the at least one end surface
(6) of the second retaining means (5), such that the corresponding complementary surfaces are configured to be able to fit with each other as mating surfaces, and in a closed position of
the bolt release system the end section (10) with opposed surfaces (11) is coupled and retained between one end surface (4) of the first retaining means (3) and one end surface (6) of the second retaining means (5), and the bolt (2) connected to the release device (1) crosses the inner hole of the first retaining means (3), the end section (10) with opposed surfaces (11) of the releasing bolt (9) and the inner hole of the second retaining means (5).

2. Bolt release system for spacecraft and launcher separation systems, according to claim 1, wherein the release device (1) is a pyrotechnic nut.

3. Bolt release system for spacecraft and launcher separation systems, according to claim 1, wherein the release device (1) is a Non Explosive Actuator - NEA.

4. Bolt release system for spacecraft and launcher separation systems, according to claim 1, wherein the release device (1) is a linear actuator.

5. Bolt release system for spacecraft and launcher separation systems, according to any of claims 1 to 4, wherein in the releasing bolt (9) the opposite end to the end section (10) with opposed
surfaces (11) has a threaded section (15).

6. Bolt release system for spacecraft and launcher separation systems, according to any of claims 1 to 5, wherein the opposed surfaces (11) of the end section (10) of the releasing bolt (9) are convex and the at least one end surface (4) of the first retaining means (3) and the at least one end surface (6) of the second retaining means (5) are concave.

7. Bolt release system for spacecraft and launcher separation systems, according to any of claims 1 to 5, wherein the opposed surfaces (11) of the end section (10) of the releasing bolt (9) are concave and the at least one end surface (4) of the first retaining means (3) and the at least one end surface (6) of the second retaining means (5) are convex.

8. Bolt release system for spacecraft and launcher separation systems, according to any of claims 6 to 7, wherein the end surfaces (4, 6) of the first retaining means (3) and of the second retaining means (5), and the opposed surfaces (11) of the releasing bolt (9) are frustoconical.

9. Bolt release system for spacecraft and launcher separation systems, according to any of claims 1 to 5, wherein the opposed surfaces (11) of the end section (10) of the releasing bolt (9) and the at least one end surface (4) of the first retaining means (3) and the at least one end surface (6) of the second retaining means (5) are flat surfaces.

10. Separation system, that comprises a band (16) with two halves, such that the halves are joined at their ends by a plurality of
bolt release systems of any of claims 1 to 9, the first retaining cap (13) and the second retaining cap (14) being joined to the band (16) by respective joining means.

11. Separation system, that comprises a plurality of hold-down and release devices (17) with a release bolt, such that each hold-down and release device (17) additionally comprises a bolt release system of any of claims 1 to 9, the first retaining cap (13) and the second retaining cap (14) being joined to the hold-down and release device (17) by respective joining means.

## Patentansprüche

1. Bolzenlösesystem für Raumfahrzeug- und Trägerraketen-Trennsysteme, das umfasst:
- eine Lösevorrichtung (1),
- einen Bolzen (2), der mit der Lösevorrichtung (1) verbunden ist und aus dieser herausragt,
- erste Haltevorrichtung (3), angrenzend an die Lösevorrichtung (1), mit mindestens einer Endfläche (4) und einem Innenloch,
- zweite Haltevorrichtung (5), die von der Lösevorrichtung (1) entfernt ist, mit mindestens einer Endfläche (6) und einem Innenloch,
- eine erste elastische Vorrichtung, die so konfiguriert ist, dass sie auf die erste Haltevorrichtung (3) wirkt,
- eine zweite elastische Vorrichtung, die so konfiguriert ist, dass sie auf die zweite Haltevorrichtung (5) wirkt,
- eine erste Haltekappe (13), die die erste Haltevorrichtung (3) mindestens teilweise umgibt und umfassend eine Verbindungsvorrichtung, wobei die erste Haltekappe (13) so konfiguriert ist, dass sie die erste Haltevorrichtung (3) in einer offenen Position des Bolzenlösesystems hält,
- eine zweite Haltekappe (14), die die zweite Haltevorrichtung (5) mindestens teilweise umgibt und umfassend eine Verbindungsvorrichtung, wobei die zweite Haltekappe (14) so konfiguriert ist, dass sie die zweite Haltevorrichtung (5) in einer offenen Position des Bolzenlösesystems hält,
- einen Lösebolzen (9), umfassend einen Endabschnitt (10) mit gegenüberliegenden Flächen (11) und einen Querschnitt (12) in seiner äußersten Position zwischen den gegenüberliegenden Flächen (11), so dass:
die gegenüberliegenden Flächen (11) des Endabschnitts (10) des Lösebolzens (9) komplementär zu der mindestens einen Endfläche (4) der ersten Haltevorrichtung (3) und zu der
mindestens einen Endfläche
(6) der zweiten Haltevorrichtung (5) sind, so dass die entsprechenden komplementären Flächen so konfiguriert sind, dass sie als Passflächen aneinander anliegen können, und in einer geschlossenen Position des Bolzenlösesystems der Endabschnitt (10) mit gegenüberliegenden Flächen (11) zwischen einer Endfläche (4) der ersten Haltevorrichtung (3) und einer Endfläche (6) der zweiten Haltevorrichtung (5) gekoppelt ist und gehalten wird und der mit der Lösevorrichtung (1) verbundene Bolzen (2) das Innenloch der ersten Haltevorrichtung (3), den Endabschnitt (10) mit gegenüberliegenden Flächen (11) des Lösebolzens (9) und das Innenloch der zweiten Haltevorrichtung (5) durchquert.

2. Bolzenlösesystem für Raumfahrzeug- und Trägerraketen-Trennsysteme nach Anspruch 1, wobei die Lösevorrichtung (1) eine pyrotechnische Schraubenmutter ist.

3. Bolzenlösesystem für Raumfahrzeug- und Trägerraketen-Trennsysteme nach Anspruch 1, wobei die Lösevorrichtung (1) ein nicht explosiver Aktuator - NEA ist.

4. Bolzenlösesystem für Raumfahrzeug- und Trägerraketen-Trennsysteme nach Anspruch 1, wobei die Lösevorrichtung (1) ein linearer Aktuator ist.

5. Bolzenlösesystem für Raumfahrzeug- und Trägerraketen-Trennsysteme nach einem der Ansprüche 1 bis 4, wobei in dem Lösebolzen (9) das dem Endabschnitt (10) mit gegenüberliegenden Oberflächen (11) gegenüberliegende Ende einen Gewindeabschnitt (15) aufweist.

6. Bolzenlösesystem für Raumfahrzeug- und Trägerraketen-Trennsysteme nach einem der Ansprüche 1 bis 5, wobei die gegenüberliegenden Flächen (11) des Endabschnitts (10) des Lösebolzens (9) konvex sind und die mindestens eine Endfläche (4) der ersten Haltevorrichtung (3) und die mindestens eine Endfläche (6) der zweiten Haltevorrichtung (5) konkav sind.

7. Bolzenlösesystem für Raumfahrzeug- und Trägerraketen-Trennsysteme nach einem der Ansprüche 1 bis 5, wobei die gegenüberliegenden Flächen (11) des Endabschnitts (10) des Lösebolzens (9) konkav sind und die mindestens eine Endfläche (4) der ersten Haltevorrichtung (3) und die mindestens eine Endfläche (6) der zweiten Haltevorrichtung (5) konvex sind.

8. Bolzenlösesystem für Raumfahrzeug- und Trägerraketen-Trennsysteme nach einem der Ansprüche 6 bis 7, wobei die Endflächen (4, 6) der ersten Haltevorrichtung (3) und der zweiten Haltevorrichtung (5) und die gegenüberliegenden Flächen (11) des Lösebolzens (9) kegelstumpfförmig sind.

9. Bolzenlösesystem für Raumfahrzeug- und Trägerraketen-Trennsysteme nach einem der Ansprüche 1 bis 5, wobei die gegenüberliegenden Flächen (11) des Endabschnitts (10) des Lösebolzens (9) und die mindestens eine Endfläche (4) der ersten Haltevorrichtung (3) und die mindestens eine Endfläche (6) der zweiten Haltevorrichtung (5) ebene Flächen sind.

10. Trennsystem, das ein Band (16) mit zwei Hälften umfasst, so dass die Hälften an ihren Enden durch eine Vielzahl von Bolzenlösesystemen nach einem der Ansprüche 1 bis 9 verbunden sind, wobei die erste Haltekappe (13) und die zweite Haltekappe (14) durch jeweilige Verbindungsvorrichtungen mit dem Band (16) verbunden sind.

11. Trennsystem, das eine Vielzahl von Halte- und Lösevorrichtungen (17) mit einem Lösebolzen umfasst, so dass jede Halte- und Lösevorrichtung (17) zusätzlich ein Bolzenlösesystem nach einem der Ansprüche 1 bis 9 umfasst, wobei die erste Haltekappe (13) und die zweite Haltekappe (14) durch jeweilige Verbindungsvorrichtungen mit der Halte- und Lösevorrichtung (17) verbunden sind.

## Revendications

1. Système de libération de boulon pour systèmes de séparation d'engin spatial et de lanceur, qui comprend :
- un dispositif de libération (1),
- un boulon (2) relié au dispositif de libération (1) et faisant saillie à partir de celui-ci,
- un premier moyen de retenue (3), adjacent au dispositif de libération (1), avec au moins une surface d'extrémité (4) et un trou intérieur,
- un second moyen de retenue (5), distal du dispositif de libération (1), avec au moins une surface d'extrémité (6) et un trou interne,
- un premier moyen élastique configuré pour agir sur le premier moyen de retenue (3),
- un second moyen élastique configuré pour agir sur le deuxième moyen de retenue (5),
- un premier capuchon de retenue (13) qui entoure au moins partiellement le premier moyen de retenue (3) et comprenant des moyens de jonction, le premier capuchon de retenue (13) étant configuré pour retenir le premier moyen de retenue (3) dans une position ouverte du système de libération de boulon,
- un second capuchon de retenue (14) qui entoure au moins partiellement le second moyen de retenue (5) et comprenant des moyens de jonction, le second capuchon de retenue (14) étant configuré pour retenir le second moyen de retenue (5) dans une position ouverte du système de libération de boulon,
- un boulon de libération (9), comprenant une section d'extrémité (10) avec des surfaces opposées (11) et une coupe transversale (12) dans sa position la plus extrême entre les surfaces opposées (11), de sorte que :
les surfaces opposées (11) de la section d'extrémité (10) du boulon de libération (9) sont complémentaires de l'au moins une surface d'extrémité (4) du premier moyen de retenue (3) et de l'au moins une surface d'extrémité (6) du second moyen de retenue (5), de sorte que les surfaces complémentaires correspondantes sont configurées pour pouvoir s'adapter les unes aux autres en tant que surfaces d'accouplement, et dans une position fermée du système de libération de boulon, la section d'extrémité (10) avec des surfaces opposées (11) est couplée et retenue entre une surface d'extrémité (4) du premier moyen de retenue (3) et une surface d'extrémité (6) du second moyen de retenue (5), et le boulon (2) connecté au dispositif de libération (1) traverse le trou interne du premier moyen de retenue (3), la section d'extrémité (10) avec des surfaces opposées (11) du boulon de libération (9) et le trou interne du second moyen de retenue (5).

2. Système de libération de boulon pour systèmes de séparation d'engin spatial et de lanceur, selon la revendication 1, dans lequel le dispositif de libération (1) est un écrou pyrotechnique.

3. Système de libération de boulon pour systèmes de séparation d'engin spatial et de lanceur, selon la revendication 1, dans lequel le dispositif de libération (1) est un actionneur non explosif (NEA).

4. Système de libération de boulon pour systèmes de séparation d'engin spatial et de lanceur, selon la revendication 1, dans lequel le dispositif de libération (1) est un actionneur linéaire.

5. Système de libération de boulon pour systèmes de séparation d'engin spatial et de lanceur, selon l'une quelconque des revendications 1 à 4, dans lequel, dans le boulon de libération (9), l'extrémité opposée à la section d'extrémité (10) avec des surfaces opposées (11) a une section filetée (15).

6. Système de libération de boulon pour systèmes de séparation d'engin spatial et de lanceur, selon l'une quelconque des revendications 1 à 5, dans lequel les surfaces opposées (11) de la section d'extrémité (10) du boulon de libération (9) sont convexes et l'au moins une surface d'extrémité (4) du premier moyen de retenue (3) et l'au moins une surface d'extrémité (6) du second moyen de retenue (5) sont concaves.

7. Système de libération de boulon pour systèmes de séparation d'engin spatial et de lanceur, selon l'une quelconque des revendications 1 à 5, dans lequel les surfaces opposées (11) de la section d'extrémité (10) du boulon de libération (9) sont concaves et l'au moins une surface d'extrémité (4) du premier moyen de retenue (3) et l'au moins une surface d'extrémité (6) du second moyen de retenue (5) sont convexes.

8. Système de libération de boulon pour systèmes de séparation d'engin spatial et de lanceur, selon l'une quelconque des revendications 6 à 7, dans lequel les surfaces d'extrémité (4, 6) du premier moyen de retenue (3) et du second moyen de retenue (5), et les surfaces opposées (11) du boulon de libération (9) sont tronconiques.

9. Système de libération de boulon pour systèmes de séparation d'engin spatial et de lanceur, selon l'une quelconque des revendications 1 à 5, dans lequel les surfaces opposées (11) de la section d'extrémité (10) du boulon de libération (9) et l'au moins une surface d'extrémité (4) du premier moyen de retenue (3) et l'au moins une surface d'extrémité (6) du second moyen de retenue (5) sont des surfaces plates.

10. Système de séparation, qui comprend une bande (16) avec deux moitiés, de sorte que les moitiés sont reliées à leurs extrémités par une pluralité de systèmes de libération de boulon selon l'une quelconque des revendications 1 à 9, le premier capuchon de retenue (13) et le second capuchon de retenue (14) étant reliés à la bande (16) par des moyens de liaison respectifs.

11. Système de séparation, qui comprend une pluralité de dispositifs de retenue et de libération (17) avec un boulon de libération, de sorte que chaque dispositif de retenue et de libération (17) comprend en outre un système de libération de boulon selon l'une quelconque des revendications 1 à 9, le premier capuchon de retenue (13) et le second capuchon de retenue (14) étant reliés au dispositif de retenue et de libération (17) par des moyens de liaison respectifs.
